# EUROPÄISCHE PATENTANMELDUNG

(11) **EP 4 455 246 A1**
(43) Veröffentlichungstag der Anmeldung: **30.10.2024**
(21) Anmeldenummer: 24170569.8
(22) Anmeldetag: 16.04.2024
(51) Int. Cl.: C09J 133/24

(54) **HAFTKLEBEMASSE FÜR DIE VERKLEBUNG VON DRUCKPLATTEN**

(30) Priorität: 27.04.2023 DE 102023110975
(71) Anmelder: TESA SE, 22848 Norderstedt (DE)
(72) Erfinder: SCHMIDT, Waldemar, 22848 Norderstedt (DE); FOMENKO, Eugen, 22848 Norderstedt (DE); KRETZMER, Ralf, 22848 Norderstedt (DE); MAYER, Bianca, 22848 Norderstedt (DE); ELLRINGMANN, Kai, 22848 Norderstedt (DE)
(74) Vertreter: tesa SE

(57) **Zusammenfassung**

Die Erfindung betrifft eine Haftklebemasse für die Verklebung von Druckplatten, umfassend ein oder mehrere Co-Polymere in einem kombinierten Massenanteil von 30 % oder mehr, bezogen auf die Masse der Haftklebemasse, wobei das eine oder die mehreren Co-Polymere herstellbar sind durch Polymerisation einer Monomerzusammensetzung und optional anschließende Vernetzung der Polymerisate, wobei die Monomerzusammensetzung bezogen auf die Masse der Monomerzusammensetzung umfasst: i) ein oder mehrere spezifische erste Monomere in einem kombinierten Massenanteil im Bereich von 5 bis 15 %, ii) ein oder mehrere spezifische zweite Monomere in einem kombinierten Massenanteil von 70 % oder mehr, und iii) ein oder mehrere spezifische dritte Monomere in einem kombinierten Massenanteil im Bereich von 5 bis 15 %.

## Beschreibung

Die Erfindung betrifft eine Haftklebemasse für die Verklebung von Druckplatten, ein entsprechendes Haftklebeband und die Verwendung entsprechender Haftklebemassen und Haftklebebänder zur Verbesserung der Ablösbarkeit der Druckplatten bei der Verarbeitung von Farbe.

Das Fügen separater Elemente ist eines der zentralen Verfahren der Fertigungstechnik. Neben anderen Methoden, wie beispielsweise dem Schweißen und dem Löten, kommt dabei heutzutage insbesondere dem Kleben, d.h. dem Fügen unter Verwendung eines Klebstoffes, eine wichtige Bedeutung zu. Eine Alternative zur Verwendung formloser Klebstoffe, die beispielsweise aus einer Tube appliziert werden, stellen hierbei sogenannte Klebebänder dar, deren Klebewirkung auf den eingesetzten Klebemassen beruht.

Für zahlreiche technischen Anwendungen sind insbesondere Haftklebebänder relevant, bei denen eine Haftklebemasse für die Klebwirkung sorgt, die bei üblichen Umgebungsbedingungen dauerhaft klebrig sowie klebfähig ist. Entsprechende Haftklebebänder können durch Druck auf ein Substrat aufgebracht werden und bleiben dort haften, lassen sich später jedoch mehr oder weniger rückstandsfrei wieder entfernen.

Haftklebebänder erfreuen sich in zahlreichen Bereichen der Technik großer Beliebtheit, da sie regelmäßig besonders einfach einzusetzen sind und eine schnelle und unkomplizierte Verbindung mehrerer Elemente ermöglichen. Neben Anwendungsbereichen in Industrien, deren Produkte für die meisten Menschen zum Alltag gehören, beispielsweise bei der Fertigung von Fahrzeugen und elektronischen Geräten, kommen Haftklebebänder auch in Bereichen zur Anwendung, die im Alltag weniger präsent sind. Dabei stellen häufig gerade diese zumeist hochspezialisierten Anwendungen besondere Anforderungen an die physikalisch-chemischen Eigenschaften von Haftklebemassen.

Ein wichtiger Industriezweig, der besonders auf leistungsfähige Haftklebebänder angewiesen ist, ist die Druckindustrie. In der Druckindustrie sind unterschiedliche Verfahren bekannt, um Motive auf Substrate zu übertragen, wobei insbesondere dem sogenannten Flexodruckverfahren eine große Bedeutung zukommt. Im Flexodruckverfahren werden flexible Druckplatten (auch als Cliche bezeichnet) auf Druckzylinder oder Druckhülsen (letztere auch als Sleeves bezeichnet) befestigt. Diese Cliches (auch "Klischee") bestehen häufig aus einer Polyethylenterephthalat-Folie (PET-Folie), auf die eine Schicht eines Fotopolymers aufgebracht ist, in denen durch selektive Belichtung das entsprechende Druckrelief eingestellt werden kann. Haftklebebänder, zumeist in der Form von doppelseitigen Klebebändern, werden im Flexodruckverfahren insbesondere dafür verwendet, um die zum Bedrucken von Substraten verwendeten Druckplatten auf den Druckzylindern bzw. Druckhülsen der verwendeten Vorrichtungen zu fixieren.

Die Anforderungen der Druckindustrie erfordern es dabei, dass während des Druckvorgangs eine ausreichende Verbundfestigkeit der angeklebten Druckplatten gewährleistet werden kann, auch bei erhöhten Temperaturen von etwa 40 bis 60 °C. Gleichzeitig müssen die entsprechenden Druckplatten jedoch nach dem Drucken von den Vorrichtungen möglichst leicht und zeiteffizient entfernt werden können, ggf. sogar nach einer langen Verklebung von beispielsweise 6 Monaten, wobei das Entfernen möglichst rückstandsfrei und ohne Beschädigung der Druckplatten möglich sein muss. Dieser Vorgang des Entfernens der Druckplatten, der in der Praxis häufig manuell durch Arbeitskräfte ausgeführt wird, erfordert, dass die eingesetzten Haftklebebänder, nach dem Druckvorgag eine gute Ablösbarkeit der Druckplatten gewährleisten, sodass die eingesetzten Arbeitskräfte keinen übermäßigen Kraftaufwand aufbringen müssen, um eine Druckplatte auszuwechseln. Weitere Informationen sind beispielsweise in der DE 102016213185 A1, der EP 3239260 A1, der EP 2226372 B1, der EP 3838934 A1, der EP2867321A1, der EP 3272829 A1, der EP 2956517 A1, der EP 3759188 A1, der US 2020392382 A1 oder der US 20150361307 A1 offenbart.

Eine Besonderheit dieses Einsatzzweckes ist es dabei, dass viele der in der Druckindustrie eingesetzten Farben eine Vielzahl von chemischen Substanzen umfassen, die die Klebeigenschaften der eingesetzten Haftklebebänder beeinflussen können. Insbesondere umfassen viele Farben Cellulosenitrat (umgangssprachlich teilweise auch als Nitrocellulose bezeichnet), welches in diesen als Bindemittel fungiert.

Selbst bei einer sehr sorgfältigen Verfahrensführung sind auch die Rückseiten der zu verklebenden Druckplatten und/oder die Oberflächen der Druckzylinder entsprechender Druckvorrichtungen häufig mit entsprechenden Substanzen wie Cellulosenitrat verunreinigt. Diese Verunreinigungen werden dabei häufig nicht nur von Farbspritzern oder anderen direkten Farbkontakten verursacht, sondern sind in vielen Fällen auch eine Folge des zur Reinigung der Druckplatten verwendeten Verfahrens. Zumeist werden die Druckplatten nämlich nach dem Einsatz durch ein Reinigungsbad geführt, welches spätestens nach der ersten Reinigung auch Cellulosenitrat umfasst. Das Reinigungsbad benetzt die Druckplatten dabei zumeist vollständig, sodass Rückstände von Cellulosenitrat auf sämtlichen Seiten der Druckplatten verbleiben.

Die Anwesenheit von Cellulosenitrat auf den zu verklebenden Flächen der Druckplatten wird regelmäßig als nachteilig empfunden. Cellulosenitrat kann nämlich zwischen der Druckplatte und der eingesetzten Haftklebemasse als Haftvermittler agieren, wodurch die Klebkraft der Haftklebemassen deutlich ansteigt. In der Praxis bedeutet dies, dass mit herkömmlichen Haftklebemassen verklebte Druckplatten nach dem Einsatz häufig eine unzureichende Ablösbarkeit von den Druckzylindern aufweisen. Hierdurch wird das Entfernen der Druckplatten für die eingesetzten Arbeitskräfte deutlich anstrengender, da diese große Kräfte aufbringen müssen, um die Druckplatten zu lösen. Darüber hinaus kann auch die Zeit- und Kosteneffizienz des gesamten Druckvorgangs nachteilig beeinflusst werden, beispielsweise wenn die verwendeten Vorrichtungen zum Zwecke der Entfernung der Druckplatten länger stillstehen müssen, wenn es wegen der starken Adhäsion beim Ablösen zu Beschädigungen der Druckplatten kommt und/oder wenn sich auszutauschende Haftklebebändern von den Druckzylindern nicht ohne großen Aufwand lösen lassen, beispielsweise in Folge eines kohäsiven Versagens, welches durch die vergrößerte Adhäsion begünstigt wird.

Im Bereich der Haftklebemassen haben sich insbesondere Poly(meth)acrylate grundsätzlich als sehr gut einsetzbare Basismaterialien erwiesen. Diese polymeren Verbindungen verfügen regelmäßig über physikalisch-chemische Eigenschaften, die sie für den Einsatz in Haftklebemassen prädestinieren, beispielsweise eine hohe Beständigkeit gegenüber Licht, Witterungseinflüssen und einer Vielzahl von Chemikalien sowie auch eine hohe intrinsische Klebkraft und eine vorteilhafte Alterungsbeständigkeit. Darüber hinaus sind Poly(meth)acrylat-basierte Klebemassen regelmäßig auf einer breiten Palette von Substraten einsetzbar, insbesondere sowohl auf polaren als auch auf weniger polaren Substraten, beispielsweise auf Glas und Stahl, aber auch auf Kunststoffen, wie beispielsweise Polystyrol oder Polycarbonaten. Im technischen Gebiet der Klebetechnik besteht entsprechend ein fortgesetztes Interesse daran, die physikalisch-chemischen Eigenschaften von Poly(meth)acrylat-basierten Haftklebemassen zu verbessern, insbesondere deren klebtechnische Eigenschaften.

Vor diesem Hintergrund sind Poly(meth)acrylat-basierte Haftklebemassen grundsätzlich auch für den Einsatz in der Druckindustrie vielversprechende Haftklebemasse. Trotz der grundsätzlichen Vorteile solcher Poly(meth)acrylat-basierten Haftklebemassen wird bei diesen Systemen jedoch häufig die vorstehend beschriebene Problematik der Wechselwirkung mit Cellulosenitrat als besonders nachteilig empfunden, wodurch ihre Einsetzbarkeit reduziert wird.

Die Erfinder haben zudem gefunden, dass neben Cellulosenitrat auch die Anwesenheit von Titanchelat-Verbindungen, deren Einsatz in bestimmten Farben wünschenswert ist, für viele Haftklebemassen problematisch ist. Die Anwesenheit entsprechender Titanchelat-Verbindungen kann die Leistungseigenschaften von Haftklebemasse für die Verklebung von Druckplatten ebenfalls nachteilig beeinflussen, so dass aus dem Stand der Technik zu diesem Zweck bekannte Haftklebemasse für die Anwendung in Verbindung mit entsprechenden Farben zuweilen als unzureichend empfunden werden.

Die primäre Aufgabe der vorliegenden Erfindung war es, die die Nachteile des Standes der Technik zu beseitigen oder zumindest zu verringern.

Insbesondere war es die Aufgabe der vorliegenden Erfindung, eine Haftklebemasse anzugeben, welche eine hinreichende Haftklebrigkeit aufweist, um die in der Druckindustrie eingesetzten Druckplatten auf typischen Untergründen, insbesondere Stahl und Kunststoffen, während des Einsatzes sicher zu fixieren, jedoch gleichzeitig eine gute Ablösbarkeit der Druckplatten und entsprechend eine möglichst leichte Auflösbarkeit des Klebeverbundes ermöglicht. Für das sichere Fixieren der Druckplatten auf den zumeist gekrümmten Untergründen wurde wird insoweit insbesondere auch ein vorteilhaftes Verhalten beim Kantenabheben gewünscht.

Hierbei war es eine Aufgabe der vorliegenden Erfindung, dass die leichte Demontierbarkeit von mit entsprechenden Haftklebemassen fixierten Druckplatten insbesondere auch dann gegeben sein, wenn die Haftklebemassen im Einsatz mit Lösungsmittel oder anderen chemischen Substanzen, insbesondere Cellulosenitrat, in Kontakt gelangen. Insoweit war es eine weitere Aufgabe der Erfindung, dass die anzugebende Haftklebemasse auch bei Kontaminierung mit Titanchelat-haltigen Verbindungen gewährleistet bleiben sollte, um eine effiziente Verarbeitung entsprechender Farben zu ermöglichen.

Es war eine ergänzende Aufgabe der vorliegenden Erfindung ein vorteilhaftes Haftklebband und eine entsprechende Verwendung anzugeben.

Die Erfinder haben nunmehr gefunden, dass sich die vorstehend beschriebenen Aufgaben überraschenderweise lösen lassen, wenn eine Haftklebemasse für die Verklebung von Druckplatten eingesetzt wird, welche zumindest zu einem Massenanteil von 30 % aus einem Co-Polymer besteht, welches aus einer Monomerzusammensetzung hergestellt wird bzw. herstellbar ist, die zumindest drei verschiedenen Monomeren in spezifischen Massenanteilen umfasst, wie es in den Ansprüchen definiert ist. Mit entsprechenden Haftklebemassen und Haftklebebändern können vorteilhafte Verklebungen mit einer hohen Druckerfarbenbeständigkeit erreicht werden, wobei die entsprechenden Haftklebebänder besonders effizient auf gekrümmten Oberflächen eingesetzt werden können, da sie ein geringes Kantenabheben und einen vorteilhaften tack zum Anbringen der Cliches zeigen. Dabei weisen die entsprechenden Haftklebemassen und Haftklebebänder eine vorteilhafte Lösungsmittelbeständigkeit auf.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Haftklebebänder und Verwendungen ergeben sich aus den Merkmalen bevorzugter Haftklebemassen.

Insoweit nachfolgend für ein Element, beispielsweise für die Bestandteile der Monomerzusammensetzung wie die ersten oder zweiten Monomere, sowohl spezifische Mengen bzw. Anteile dieses Elementes als auch bevorzugte Ausgestaltungen des Elementes offenbart werden, sind insbesondere auch die spezifischen Mengen bzw. Anteile der bevorzugt ausgestalteten Elemente offenbart. Zudem ist offenbart, dass bei den entsprechenden spezifischen Gesamtmengen bzw. Gesamtanteilen der Elemente zumindest ein Teil der Elemente bevorzugt ausgestaltet sein kann und insbesondere auch, dass bevorzugt ausgestaltete Elemente innerhalb der spezifischen Gesamtmengen oder Gesamtanteile wiederum in den spezifischen Mengen bzw. Anteilen vorliegen können.

Die Erfindung betrifft insbesondere Haftklebemasse für die Verklebung von Druckplatten, umfassend ein oder mehrere Co-Polymere in einem kombinierten Massenanteil von 30 % oder mehr, bezogen auf die Masse der Haftklebemasse,
wobei das eine oder die mehreren Co-Polymere herstellbar sind durch Polymerisation einer Monomerzusammensetzung und optional anschließende Vernetzung der Polymerisate, wobei die Monomerzusammensetzung bezogen auf die Masse der Monomerzusammensetzung umfasst:
   i) ein oder mehrere erste Monomere in einem kombinierten Massenanteil im Bereich von 5 bis 15 %, wobei die ersten Monomere ausgewählt sind aus der Gruppe bestehend aus Verbindungen der Formel I)

      I) CH₂=CR¹-C(O)NR²R³

      ,
      wobei R¹ Wasserstoff oder eine Methylgruppe ist,
      wobei R² ausgewählt ist aus der Gruppe bestehend aus Alkylgruppen, Hydroxyalkylgruppen und Acetonylgruppen und wobei R³ ausgewählt ist aus der Gruppe bestehend aus Wasserstoff, Alkylgruppen, Hydroxyalkylgruppen, Arylgruppen, Aminoalkylgruppe und Acetonylgruppen, oder wobei R² und R³ gemeinsam eine organische Verbindungskette bilden, so dass NR²R³ ein Ring mit n Ringatomen ist, wobei n im Bereich von 5 bis 8 liegt,
   ii) ein oder mehrere zweite Monomere in einem kombinierten Massenanteil von 70 % oder mehr, wobei die zweiten Monomere ausgewählt sind aus der Gruppe bestehend aus Verbindungen der Formel II)

      II) CH₂=CR⁴-C(O)O-R⁵

      ,
      wobei R⁴ Wasserstoff oder eine Methylgruppe ist,
      wobei R⁵ ausgewählt ist aus der Gruppe bestehend aus Alkylgruppen und Arylgruppen, und
   iii) ein oder mehrere dritte Monomere in einem kombinierten Massenanteil im Bereich von 5 bis 15 %, wobei die dritten Monomere ausgewählt sind aus der Gruppe bestehend aus Verbindungen der Formel III)

      III) CH₂=CR⁶-C(O)O-R⁷

      ,
wobei R⁶ Wasserstoff oder eine Methylgruppe ist,
wobei R⁷ ausgewählt ist aus der Gruppe bestehend aus Wasserstoff und Hydroxyalkylgruppen mit 2 bis 4 Kohlenstoffatomen.

Die erfindungsgemäßen Haftklebemassen sind für den Einsatz in der Druckindustrie vorgesehen und entsprechend für die Verklebung von Druckplatten besonders geeignet.

Eine Haftklebemasse ist in Übereinstimmung mit dem fachmännischen Verständnis eine Klebemasse, die über haftklebrige Eigenschaften verfügt, d.h. über die Eigenschaft bereits unter relativ schwachem Andruck eine dauerhafte Verbindung zu einem Haftgrund einzugehen. Entsprechende Haftklebebänder sind üblicherweise nach Gebrauch im Wesentlichen rückstandsfrei vom Haftgrund wieder ablösbar und in der Regel schon bei Raumtemperatur permanent eigenklebrig, was bedeutet, dass sie eine gewisse Viskosität und Anfassklebrigkeit aufweisen, sodass sie die Oberfläche eines Untergrunds bereits bei geringem Andruck benetzen. Die Haftklebrigkeit eines Haftklebebandes ergibt sich daraus, dass als Klebemasse eine Haftklebemasse verwendet wird. Ohne an diese Theorie gebunden sein zu wollen, wird häufig davon ausgegangen, dass eine Haftklebemasse als extrem hochviskose Flüssigkeit mit einem elastischen Anteil betrachtet werden kann, die demzufolge charakteristische viskoelastische Eigenschaften aufweist, die zu der vorstehend beschriebenen dauerhaften Eigenklebrigkeit und Haftklebefähigkeit führen. Man geht davon aus, dass es bei entsprechenden Haftklebemassen bei mechanischer Deformation sowohl zu viskosen Fließprozessen als auch zum Aufbau elastischer Rückstellkräfte kommt. Der anteilige viskose Fluss dient dabei zur Erzielung von Adhäsion, während die anteiligen elastischen Rückstellkräfte insbesondere zur Erzielung von Kohäsion notwendig sind. Die Zusammenhänge zwischen der Rheologie und der Haftklebrigkeit sind im Stand der Technik bekannt und beispielsweise in "Satas, Handbook of Pressure Sensitive Adhesives Technology", Third Edition, (1999), Seiten 153 bis 203, beschrieben. Zur Charakterisierung des Maßes an elastischem und viskosem Anteil werden üblicherweise der Speichermodul (G`) und der Verlustmodul (G") herangezogen, die mittels dynamisch mechanischer Analyse (DMA), beispielsweise unter Verwendung eines Rheometers, ermittelt werden können, wie es beispielsweise in der WO 2015/189323 offenbart wird. Im Rahmen der vorliegenden Erfindung wird eine Klebemasse vorzugsweise dann als haftklebrig und somit als Haftklebemasse verstanden, wenn bei einer Temperatur von 23 °C im Deformationsfrequenzbereich von 10⁰ bis 10¹ rad/sec G` und G" jeweils zumindest zum Teil im Bereich von 10³ bis 10⁷ Pa liegen.

Die erfindungsgemäße Haftklebemasse umfasst Co-Polymere, die wiederum aus verschiedenen Monomeren herstellbar bzw. hergestellt sind. In Übereinstimmung mit dem fachmännischen Verständnis und dem üblichen Vorgehen im Bereich der Technik ist es zielführend, polymere Verbindungen wie die Co-Polymere über das Herstellungsverfahren beziehungsweise die zur Herstellung verwendeten Ausgangsmaterialien zu definierten, da es unmöglich ist, die entsprechenden Materialien anders sinnvoll zu definieren.

Vorliegend erfolgt die Definition der Co-Polymere über die Zusammensetzung der Monomerzusammensetzung, aus denen diese Herstellbar sind, wobei die Polymerisate optional durch chemische Vernetzer vernetzt werden können. Die Bestandteile dieser Monomerzusammensetzung werden dabei in Übereinstimmung mit dem fachmännischen Verständnis jeweils als "ein oder mehrere" eingesetzt. Die Bezeichnung "ein oder mehrere" bezieht sich dabei in branchenüblicher Weise auf die chemische Natur der entsprechenden Verbindungen und nicht auf deren Stoffmenge. Beispielsweise kann die Monomerzusammensetzung als drittes Monomer ausschließlich Acrylsäure umfassen, was bedeuten würde, dass die Monomerzusammensetzung eine Vielzahl von Acrylsäure-Molekülen umfasst.

Im Rahmen der vorliegenden Erfindung umfasst der Ausdruck "(Meth)acrylat" in Übereinstimmung mit dem fachmännischen Verständnis Acrylate und Methacrylate.

Die Herstellung der Co-Polymere aus der Monomerzusammensetzung kann nach den gängigen Verfahren erfolgen, insbesondere durch konventionelle radikalische Polymerisationen oder kontrollierte radikalische Polymerisationen. Die Polymere bzw. Oligomere können durch Copolymerisation der monomeren Komponenten unter Verwendung der üblichen Polymerisationsinitiatoren sowie gegebenenfalls von Reglern hergestellt werden, wobei bei den üblichen Temperaturen beispielsweise in Substanz, in Emulsion, z.B. in Wasser oder flüssigen Kohlenwasserstoffen, oder in Lösung polymerisiert werden kann. Bevorzugt ist eine erfindungsgemäße Haftklebemasse, wobei das eine oder die mehreren Co-Polymere herstellbar sind durch radikalische Polymerisation der Monomerzusammensetzung, bevorzugt durch radikalische Polymerisation in Lösungsmittel oder in Substanz. Besonders bevorzugt werden die Co-Polymere durch Polymerisation in Lösungsmitteln, besonders bevorzugt in Lösungsmitteln mit einer Siedetemperatur im Bereich von 50 bis 150 °C, besonders bevorzugt im Bereich von 60 bis 120 °C, unter Verwendung der üblichen Mengen an Polymerisationsinitiatoren, hergestellt, wobei die Polymerisationsinitiatoren der Monomerzusammensetzung im Allgemeinen in einem Anteil von etwa 0,01 bis 5 %, insbesondere von 0,1 bis 2 % zugesetzt werden, bezogen auf die Masse der Monomerzusammensetzung.

Geeignete Polymerisationsinitiatoren sind beispielsweise Radikalquellen wie Peroxide, Hydroperoxide und Azoverbindungen, z.B. Dibenzoylperoxid, Cumolhydroperoxid, Cyclohexanonperoxid, Di-t-butylperoxid, Cyclohexylsulfonylacetylperoxid, Diisopropylpercarbonat, t-Butylperoktoat oder Benzpinacol. Besonders bevorzugt wird als radikalischer Initiator 2,2'-Azobis(2-methylbutyronitril) oder 2,2'-Azobis(2-methylpropionitril) verwendet. Als Lösungsmittel kommen insbesondere Alkohole wie Methanol, Ethanol, n- und isoPropanol, n- und iso-Butanol, vorzugsweise Isopropanol und/oder Isobutanol, sowie Kohlenwasserstoffe wie Toluol und insbesondere Benzine mit einer Siedetemperatur im Bereich von 60 bis 120 °C in Frage. Insbesondere können Ketone, wie beispielsweise Aceton, Methylethylketon und Methylisobutylketon, und Ester, wie beispielsweise Essigsäureethylester, sowie Mischungen dieser Lösungsmittel eingesetzt werden.

Bevorzugt ist eine erfindungsgemäße Haftklebemasse, wobei das eine oder die mehreren Co-Polymere herstellbar sind durch thermisch-induzierte oder strahlungs-induzierte radikalische Polymerisation der Monomerzusammensetzung und optional anschließende Vernetzung der Polymerisate.

Besonders bevorzugt ist eine erfindungsgemäße Haftklebemasse, umfassend das eine oder die mehreren Co-Polymere als vernetzte Co-Polymere, wobei die vernetzten Co-Polymere herstellbar sind durch Polymerisation der Monomerzusammensetzung und anschließende Vernetzung der durch Polymerisation erhaltenen Polymerisate, wobei die anschließende Vernetzung bevorzugt mit einem chemischen Vernetzer erfolgt.

Bevorzugt ist dabei eine erfindungsgemäße Haftklebemasse, wobei der chemische Vernetzer ausgewählt ist aus der Gruppe bestehend aus multifunktionellen Epoxiden und multifunktionellen (Meth)acrylaten, wobei die Vernetzung bevorzugt radikalisch erfolgt.

Bevorzugt ist in einer ersten Variante eine erfindungsgemäße Haftklebemasse, wobei der chemische Vernetzer ausgewählt ist aus der Gruppe bestehend aus multifunktionellen Epoxiden und in einem Massenanteil im Bereich von 0,05 bis 2,0 %, besonders bevorzugt im Bereich von 0,1 bis 1,5 %, eingesetzt wird, bezogen auf die kombinierte Masse der Co-Polymere.

Bevorzugt ist in einer zweiten Variante eine erfindungsgemäße Haftklebemasse, wobei der chemische Vernetzer ausgewählt ist aus der Gruppe bestehend aus multifunktionellen (Meth)acrylaten und in einem Massenanteil im Bereich von 1 bis 20 %, bevorzugt im Bereich von 2 bis 15 %, besonders bevorzugt im Bereich von 3 bis 10 %, eingesetzt wird, bezogen auf die kombinierte Masse der Co-Polymere.

Die Erfinder haben dabei bevorzugte Polymerisationsgrade identifiziert, die zum Erhalt besonders vorteilhafter Eigenschaften eingestellt werden können. Bevorzugt ist nämlich eine erfindungsgemäße Haftklebemasse, wobei das eine oder die mehreren Co-Polymere ein gewichtsmittleres Molekulargewicht M_{w}, gemessen mittels GPC, von 500000 g/mol oder mehr, bevorzugt von 600000 g/mol oder mehr, besonders bevorzugt von 700000 g/mol oder mehr, aufweist. Die Bestimmung des gewichtsmittleren Molekulargewichts erfolgt dabei mittels Gelpermeationschromatographie (GPC) an 100 mL klarfiltrierter Probe (Probenkonzentration 0,5 g/L). Als Eluent wird Tetrahydrofuran mit 0,1 Vol.-% Trifluoressigsäure eingesetzt. Die Messung erfolgt bei 25 °C. Als Vorsäule wird eine Säule vom Typ PSS-SDV, 10 µm, ID 8,0 mm x 50 mm verwendet. Zur Auftrennung werden Säulen des Typs PSS-SDV, 5 µm, 10³ Ä (SN9090201) sowie 5 µm, 10² Ä (SN9090200) mit jeweils ID 8,0 mm x 300 mm eingesetzt (Detektion mittels Differentialrefraktometer PSS-SECurity 1260 RID). Die Durchflussmenge beträgt 0,5 mL pro Minute. Die Kalibrierung erfolgt gegen PMMA-Standards (Polymethylmethacrylat-Kalibrierung).

Der Fachmann versteht, dass aus der Polymerisation der Monomerzusammensetzung ein optional vernetztes Co-Polymer resultiert, dessen Monomereinheiten in der Polymerkette von den Monomeren der Monomerzusammensetzung abgeleitet sind, wobei diese Monomereinheiten bevorzugt überwiegend statistisch, besonders bevorzugt vollständig statistisch, in der Polymerkette vorliegen.

In anderen Worten handelt es sich in diesem Fall um eine Haftklebemasse für die Verklebung von Druckplatten, umfassend ein oder mehrere Co-Polymere in einem kombinierten Massenanteil von 30 % oder mehr, bezogen auf die Masse der Haftklebemasse, wobei das eine oder die mehreren Co-Polymere bezogen auf die Gesamtmasse der Co-Polymere umfassen:
i.2) erste Monomereinheiten in einem kombinierten Massenanteil im Bereich von 5 bis 15 %, wobei die ersten Monomereinheiten abgeleitet sind aus ersten Monomeren, wie vorstehend offenbart,
ii.2) zweite Monomereinheiten in einem kombinierten Massenanteil von 70 % oder mehr, wobei die zweiten Monomereinheiten abgeleitet sind aus zweiten Monomeren, wie vorstehend offenbart, und
iii.2) dritte Monomereinheiten in einem kombinierten Massenanteil im Bereich von 5 bis 15 %, wobei die dritten Monomereinheiten abgeleitet sind aus dritten Monomeren, wie vorstehend offenbart,
wobei die ersten Monomereinheiten, zweiten Monomereinheiten und dritten Monomereinheiten bevorzugt statistisch entlang der Polymerkette verteilt sind, wobei die Co-Polymere bevorzugt vierte Monomereinheiten umfassen, wobei die vierten Monomereinheiten von chemische Vernetzern abgeleitet sind, insbesondere von multifunktionellen Epoxiden und multifunktionellen (Meth)acrylaten.

Zumindest theoretisch ist es denkbar, dass erfindungsgemäße Haftklebemasse weitere Bestandteile umfassen, wobei insbesondere Klebharze, d.h. Polymere Verbindungen, deren gewichtsmittleres Molekulargewicht M_{w}, gemessen mittels GPC, typischerweise 20000 g/mol oder weniger beträgt, in Frage kommen. Diese Flexibilität ist vorteilhaft, da es dadurch möglich wird, erfindungsgemäße Haftklebemassen gezielt an die jeweiligen Anwendungserfordernisse des jeweiligen Anwendungszwecks anzupassen. Bevorzugt ist für manche Anwendungen somit eine erfindungsgemäße Haftklebemasse, wobei die Haftklebemasse ein oder mehrere Klebharze umfasst, bevorzugt in einem kombinierten Massenanteil im Bereich von 1 bis 30 %, bevorzugt im Bereich von 2 bis 20 %, ganz besonders bevorzugt im Bereich von 3 bis 10 %, bezogen auf die Masse der Haftklebemasse. Beispielhaft ist insoweit eine erfindungsgemäße Haftklebemasse, wobei das eine oder die mehreren Klebharze ausgewählt sind aus der Gruppe bestehend aus Pinen- und Indenharzen, Kolophonium und Kolophoniumderivaten wie Kolophoniumestern, Polyterpenharzen, Terpenphenolharzen, Alkylphenolharzen und aliphatischen, aromatischen und aliphatisch-aromatischen Kohlenwasserstoffharzen.

Bevorzugt ist zusätzlich oder alternativ auch eine erfindungsgemäße Haftklebemasse, wobei die Haftklebemasse ein oder mehrere weitere Additive umfasst, bevorzugt in einem kombinierten Massenanteil im Bereich von 0,1 bis 20 %, bevorzugt im Bereich von 0,2 bis 15 %, ganz besonders bevorzugt im Bereich von 0,5 bis 10 %, bezogen auf die Masse der Haftklebemasse, wobei das eine oder die mehreren weiteren Additive bevorzugt ausgewählt sind aus der Gruppe bestehend aus Alterungsschutzmitteln, Lichtschutzmitteln, UV-Absorbern und rheologischen Additiven.

Als besonderer Vorteil erfindungsgemäßer Haftklebemasse kann es jedoch gesehen werden, dass diese auch ohne den Einsatz von Klebharzen oder weiteren Additiven ausgezeichnete Eigenschaften zeigen und insbesondere für die Verklebung von Druckplatten besonders geeignet sind. Entsprechend erachten es die Erfinder auch als besonders vorteilhaft, die erfindungsgemäße Haftklebemasse überwiegend, bevorzugt weit überwiegend, insbesondere bevorzugt im Wesentlichen vollständig, aus den Co-Polymeren auszubilden. Bevorzugt ist demgemäß eine erfindungsgemäße Haftklebemasse, wobei die Haftklebemasse das eine oder die mehreren Co-Polymere in einem kombinierten Massenanteil von 50 % oder mehr, bevorzugt 70 % oder mehr, besonders bevorzugt 90 % oder mehr, ganz besonders bevorzugt 95 % oder mehr, umfasst, bezogen auf die Masse der Haftklebemasse. Bevorzugt ist entsprechend zusätzlich oder alternativ auch eine erfindungsgemäße Haftklebemasse, wobei der kombinierte Massenanteil an Klebharzen und/oder weiteren Additiven, bevorzugt an Klebharzen und weiteren Additiven, in der Haftklebemasse 5 % oder weniger, bevorzugt 1 % oder weniger, besonders bevorzugt 0,1 % oder weniger, beträgt, wobei die Haftklebemasse bevorzugt frei von Klebharzen ist.

Nach Einschätzung der Erfinder können in der Monomerzusammensetzung in dem vorstehend zugelassenen Umfang, d.h. bis zu einem kombinierten Gesamtmassenanteil aller Monomere von 100 %, auch weitere Monomere enthalten sein, bei denen es sich nicht um erste Monomere, zweite Monomere oder dritte Monomere handelt, ohne die vorteilhaften Eigenschaften der erfindungsgemäß einzusetzenden Co-Polymere allzu nachteilig zu beeinflussen. Ausgehend von den Experimenten der Erfinder ist es jedoch besonders bevorzugt, wenn die Co-Polymere möglichst weitgehend aus den ersten Monomeren, zweiten Monomeren und dritten Monomeren ausgebildet sind. Besonders bevorzugt ist vor diesem Hintergrund eine erfindungsgemäße Haftklebemasse, wobei die Monomerzusammensetzung bezogen auf die Masse der Monomerzusammensetzung erste Monomere, zweite Monomere und dritte Monomere in einem kombinierten Massenanteil von 80 % oder mehr, bevorzugt von 90 % oder mehr, besonders bevorzugt von 95 % oder mehr, ganz besonders bevorzugt von 98 % oder mehr, insbesondere bevorzugt von 99 % oder mehr, überausbevorzugt von im Wesentlichen 100 %, umfasst.

Hinsichtlich der Massenanteile ist es den Erfindern gelungen, für die ersten Monomere, zweiten Monomere und dritten Monomere jeweils besonders bevorzugte Bereiche zu identifizieren, mit denen sich insbesondere für den Einsatz bei der Verklebung von Druckplatten ein besonders günstiges Leistungsprofil ergibt, insbesondere hinsichtlich der klebtechnischen Eigenschaften und der Chemikalienbeständigkeit.

Bevorzugt ist nämlich zunächst eine erfindungsgemäße Haftklebemasse, wobei der kombinierte Massenanteil der ersten Monomere in der Monomerzusammensetzung im Bereich von 6 bis 13 %, bevorzugt im Bereich von 7 bis 11 %, besonders bevorzugt im Bereich von 8 bis 10 %, liegt. Bevorzugt ist zusätzlich oder alternativ auch eine erfindungsgemäße Haftklebemasse, wobei der kombinierte Massenanteil der zweiten Monomere in der Monomerzusammensetzung 75 % oder mehr, bevorzugt 80 % oder mehr, beträgt. Bevorzugt ist wiederum bevorzugt oder alternativ eine erfindungsgemäße Haftklebemasse, wobei der kombinierte Massenanteil der dritten Monomere in der Monomerzusammensetzung im Bereich von 6 bis 13 %, bevorzugt im Bereich von 7 bis 11 %, besonders bevorzugt im Bereich von 8 bis 10 %, liegt.

Nach Einschätzung der Erfinder lässt sich insbesondere die Chemikalienbeständigkeit erfindungsgemäßer Haftklebebänder in vorteilhafter Weise durch die Einstellung des Verhältnisses zwischen den ersten Monomeren und den zweiten Monomeren beeinflussen. Insoweit ist es den Erfindern gelungen, für den entsprechenden Quotienten besonders vorteilhafte Wertebereiche zu identifizieren, mit denen besonders leistungsfähige erfindungsgemäße Haftklebemasse erhalten werden können, die sich insbesondere für den Einsatz in der Druckindustrie und bei der Verarbeitung von Farben, insbesondere Cellulosenitrat-haltiger Farbe und/oder Titanchelat-haltiger Farbe, eignen. Bevorzugt ist nämlich eine erfindungsgemäße Haftklebemasse, wobei in der Monomerzusammensetzung der Quotient aus dem kombinierten Massenanteil der ersten Monomere geteilt durch den kombinierten Massenanteil der dritten Monomere 0,8 oder mehr, bevorzugt 1,0 oder mehr, besonders bevorzugt 1,2 oder mehr, beträgt, und/oder wobei in der Monomerzusammensetzung der Quotient aus dem kombinierten Massenanteil der ersten Monomere geteilt durch den kombinierten Massenanteil der dritten Monomere 2,5 oder weniger, bevorzugt 2,0 oder weniger, besonders bevorzugt 1,5 oder weniger, beträgt.

Die ersten Monomere, zweiten Monomere und dritten Monomere sind vorstehend so definiert, dass die positiven Eigenschaften der Co-Polymere nach Einschätzung der Erfinder für im Wesentlichen alle entsprechenden Monomere realisiert werden können, wobei in Übereinstimmung mit dem fachmännischen Verständnis insbesondere jeweils die entsprechenden Acrylate und Methacrylate eingesetzt werden. Jedoch ist es den Erfindern ausgehend von eigenen Experimenten gelungen, für die ersten Monomere, zweiten Monomere und dritten Monomere jeweils besonders bevorzugte Verbindungen zu identifizieren, mit denen sich vorteilhafte Co-Polymere erhalten lassen, die für den Einsatz in erfindungsgemäßen Haftklebemassen besonders geeignet sind.

Die ersten Monomere umfassen die nach Einschätzung der Erfinder notwendige Amid-Gruppe, wobei die am Amid angeordneten Reste R² und R³ darüber hinaus recht frei gewählt werden können, wobei es auch möglich ist, dass NR²R³ ein Ring ist, so dass -R²-R³- eine Kette ist, die mit beiden freien Valenzen an das Stickstoffatom anbindet. Bevorzugt ist hierbei eine erfindungsgemäße Haftklebemasse, wobei die ersten Monomere ausgewählt sind aus der Gruppe bestehend aus Verbindungen der Formel I), wobei R² ausgewählt ist aus der Gruppe bestehend aus Alkylgruppen, bevorzugt mit 1 bis 10 Kohlenstoffatomen, besonders bevorzugt mit 1 bis 6 Kohlenstoffatomen, und wobei R³ ausgewählt ist aus der Gruppe bestehend aus Wasserstoff und Alkylgruppen, bevorzugt mit 1 bis 10 Kohlenstoffatomen, besonders bevorzugt mit 1 bis 6 Kohlenstoffatomen, oder wobei R² und R³ gemeinsam eine organische Verbindungskette bilden, so dass NR²R³ ein Sechsring ist. Besonders bevorzugt ist dabei eine erfindungsgemäße Haftklebemasse, wobei die ersten Monomere ausgewählt sind aus der Gruppe bestehend aus Verbindungen der Formel I), wobei R² ausgewählt ist aus der Gruppe bestehend aus Alkylgruppen, bevorzugt mit 1 bis 10 Kohlenstoffatomen, besonders bevorzugt mit 1 bis 6 Kohlenstoffatomen, und wobei R³ ausgewählt ist aus der Gruppe bestehend aus Wasserstoff und Alkylgruppen, bevorzugt mit 1 bis 10 Kohlenstoffatomen, besonders bevorzugt mit 1 bis 6 Kohlenstoffatomen, wobei R² und R³ bevorzugt identisch sind.

Prinzipiell bevorzugt ist eine erfindungsgemäße Haftklebemasse, wobei die ersten Monomere ausgewählt sind aus der Gruppe bestehend aus Verbindungen der Formel I), wobei R¹ Wasserstoff ist.

Grundsätzlich bevorzugt ist zusätzlich oder alternativ eine erfindungsgemäße Haftklebemasse, wobei die ersten Monomere ausgewählt sind aus der Gruppe bestehend aus Dimethylacrylamid, N-t-Butylacrylamid und N-acryloylmorpholine, bevorzugt ausgewählt sind aus der Gruppe bestehend aus Dimethylacrylamid und N-t-Butylacrylamid, besonders bevorzugt Dimethylacrylamid.

Die zweiten Monomere bilden den Bestandteil der Monomerzusammensetzung mit dem größten Massenanteil. Hierfür muss erfindungsgemäß auf (Meth)acrylate mit unpolaren Resten, welche insbesondere keine weiteren funktionellen Gruppen tragen, zurückgegriffen werden. Bevorzugt ist dabei eine erfindungsgemäße Haftklebemasse, wobei die zweiten Monomere ausgewählt sind aus der Gruppe bestehend aus Verbindungen der Formel II), wobei R⁵ ausgewählt ist aus der Gruppe bestehend aus Alkylgruppen, bevorzugt Alkylgruppen mit 2 bis 10 Kohlenstoffatomen, bevorzugt mit 3 bis 9 Kohlenstoffatomen, besonders bevorzugt mit 4 bis 8 Kohlenstoffatomen.

Prinzipiell bevorzugt ist eine erfindungsgemäße Haftklebemasse, wobei die zweiten Monomere ausgewählt sind aus der Gruppe bestehend aus Verbindungen der Formel II), wobei R⁴ Wasserstoff ist.

Grundsätzlich bevorzugt ist eine erfindungsgemäße Haftklebemasse, wobei die zweiten Monomere ausgewählt sind aus der Gruppe bestehend aus Butyl(meth)acrylat und Ethylhexyl(meth)acrylat, bevorzugt ausgewählt sind aus der Gruppe bestehend aus Butylacrylat und Ethylhexylacrylat.

Hinsichtlich der zweiten Monomere hat es sich zur optimalen Einstellung der gewünschten physikalisch-chemischen Eigenschaften der Co-Polymere als vorteilhaft erwiesen, verschiedene zweite Monomere miteinander zu kombinieren. Bevorzugt ist entsprechend eine erfindungsgemäße Haftklebemasse, wobei die Monomerzusammensetzung zwei oder mehr zweite Monomere umfasst.

Die dritten Monomere tragen eine azide Funktionalität, wobei es besonders überraschend war, dass sich mit den angegebenen Konzentrationen an aziden Monomeren, wie beispielsweise (Meth)acrylsäure, die grundsätzlich über den Massenanteilen liegen, die ein Fachmann üblicherweise in typischen Polymeren für den Einsatz bei der Verklebung von Druckplatten einsetzten würde, derart vorteilhafte Co-Polymere bzw. Haftklebemassen erhalten lassen.

Besonders bevorzugt ist eine erfindungsgemäße Haftklebemasse, wobei die dritten Monomere ausgewählt sind aus der Gruppe bestehend aus Verbindungen der Formel III), wobei R⁷ Wasserstoff ist.

Prinzipiell bevorzugt ist eine erfindungsgemäße Haftklebemasse, wobei die dritten Monomere ausgewählt sind aus der Gruppe bestehend aus Verbindungen der Formel III), wobei R⁶ Wasserstoff ist.

Ein besonderer Fall von Additiven, welche der Einstellung der Eigenschaften von Haftklebemassen dienen, sind unlösliche Füllstoffe, die der Haftklebemasse zugesetzt werden können, um eine gefüllte Haftklebemasse zu erhalten. Bei diesen handelt es sich um partikuläre Füllstoffe mit einem mittleren Partikeldurchmesser (D50) von 5 µm oder mehr, bevorzugt 10 µm oder mehr, besonders bevorzugt 20 µm oder mehr, die in der Haftklebemasse nicht löslich sind und in dieser entsprechend als Dispersion vorliegen sowie um makroskopische Füllstoffe wie beispielsweise Fasern. Bevorzugt sind die unlöslichen Füllstoffe ausgewählt aus der Gruppe bestehend aus partikulären Füllstoffen. Besonders bevorzugt sind die unlöslichen Füllstoffe ausgewählt aus der Gruppe bestehend aus expandierbaren Polymerhohlkugeln, nicht expandierbaren Polymerhohlkugeln, Polymervollkugeln, Glashohlkugeln, Glasvollkugeln, keramische Hohlkugeln, keramische Vollkugeln und/oder Kohlenstoffvollkugeln. In Frage kommen als unlösliche Füllstoffe beispielsweise jedoch auch Fasern, Gelege, Plättchen und Stäbchen aus in der Haftklebemasse unlöslichen Materialien. Durch ihre teilweise schon makroskopischen Abmessungen und die fehlende Löslichkeit haben diese im Wesentlichen keinen Einfluss auf die vorstehend offenbarten Zusammenhänge der Zusammensetzungschemie der Haftklebemasse, sondern liegen vielmehr in heterogener Mischung mit der Haftklebemasse vor. Entsprechend werden diese unlöslichen Füllstoffe im Rahmen der vorliegenden Erfindung nicht der Haftklebemasse zugerechnet und werden entsprechend bei der Berechnung von Massenanteilen relativ zur Masse der Haftklebemasse nicht berücksichtigt. Im Rahmen der vorliegenden Erfindung wird vielmehr definiert, dass der Zusatz von unlöslichen Füllstoffen zu einer erfindungsgemäßen Haftklebemasse in einer gefüllten Haftklebemasse resultiert, d.h. einer gefüllten Haftklebemasse, umfassend:
x) eine erfindungsgemäße Haftklebemasse, bevorzugt wie vorstehend als bevorzugt offenbart, und
y) einen oder mehrere unlösliche Füllstoffe.

Bevorzugt liegt der kombinierte Massenanteil der unlöslichen Füllstoffe dabei im Bereich von 1 bis 50 %, besonders bevorzugt im Bereich von 2 bis 40 %, ganz besonders bevorzugt im Bereich von 5 bis 30 %.

Erfindungsgemäße Haftklebemassen können beispielsweise direkt als Klebemassen eingesetzt werden, wobei sie je nach Applikationsmethode beispielsweise auch in Form von Bändern bereitgestellt werden können. Mit Blick auf möglichst günstige Handhabungseigenschaften werden besonders vorteilhafte Resultate jedoch regelmäßig dann erzielt, wenn erfindungsgemäße Haftklebemassen als Klebeschicht eines ein- oder doppelseitigen Haftklebebandes eingesetzt werden, welches zudem eine Trägerschicht umfasst. Insbesondere für die Befestigung von Druckplatten sind dabei doppelseitige Haftklebebänder bevorzugt, die auf beiden Seiten eine erfindungsgemäße Haftklebemasse einsetzen. Die Erfindung betrifft auch ein Haftklebeband, insbesondere doppelseitiges Haftklebeband, umfassend eine Trägerschicht und eine auf der Trägerschicht angeordnete Klebeschicht, wobei die Klebeschicht eine erfindungsgemäße Haftklebemasse umfasst oder daraus besteht.

Der Begriff Klebeband ist für den Fachmann im Bereich der Klebetechnik klar. Im Rahmen der vorliegenden Erfindung bezeichnet der Ausdruck Band alle dünnen, flächigen Gebilde, d.h. Gebilde mit einer überwiegenden Ausdehnung in zwei Dimensionen, insbesondere Folien, Folienabschnitte und Etiketten, bevorzugt Bänder mit ausgedehnter Länge und begrenzter Breite sowie entsprechende Bandabschnitte.

Die Trägerschicht bezeichnet zumeist die Schicht eines solchen mehrschichtigen Klebebandes, die die mechanischen und physikalischen Eigenschaften des Klebebandes, wie beispielsweise die Reißfestigkeit, Dehnbarkeit, Isolations- oder Rückstellvermögen, maßgeblich bestimmt. Übliche Materialien für die Trägerschicht sind beispielsweise Gewebe, Gelege und Kunststofffolien, zum Beispiel PET-Folien und Polyolefin-Folien. Bevorzugt ist ein erfindungsgemäßes Haftklebeband, wobei die Trägerschicht einen Kunststoff umfasst oder aus einem Kunststoff besteht, bevorzugt Polyethylenterephthalat oder Polypropylen.

Die Trägerschicht kann jedoch auch selbst haftklebrig sein. Das erfindungsgemäße Haftklebeband kann in einer besonders bevorzugten Ausführungsform ein doppelseitiges Haftklebeband sein, dessen Trägerschicht auf beiden Seiten mit einer erfindungsgemäßen Haftklebemasse versehen ist. In erfindungsgemäßen Haftklebebändern können die Klebeschichten mit einem sogenannten Releaseliner abgedeckt sein, um ein problemloses Abwickeln zu ermöglichen und die Haftklebemasse vor Verschmutzung zu schützen. Solche Releaseliner bestehen üblicherweise aus einer ein- oder beidseitig silikonisierten Kunststofffolie (z.B. PET oder PP) oder einem silikonisierten Papierträger.

Die Erfindung betrifft abschließend auch die Verwendung einer erfindungsgemäßen Haftklebemasse oder eines erfindungsgemäßen Haftklebebandes zur Befestigung von Druckplatten, insbesondere flexiblen Druckplatten, auf einem Druckzylinder oder einer Druckhülse, zur Verbesserung der Ablösbarkeit der Druckplatten bei der Verarbeitung von Farbe, insbesondere Cellulosenitrat-haltiger Farbe und/oder Titanchelat-haltiger Farbe.

Bevorzugt ist dabei eine erfindungsgemäße Verwendung, wobei die Farbe eine Cellulosenitrat-haltige, bevorzugt eine Cellulosenitrat-haltige und Titanchelathaltige Farbe, ist.

Offenbart wird zudem ein Verfahren zur Herstellung erfindungsgemäßer Haftklebemassen, umfassend die Verfahrensschritte:
aa) Herstellen oder Bereitstellen einer Monomerzusammensetzung umfassend ein oder mehrere erste Monomere in einem kombinierten Massenanteil im Bereich von 5 bis 15 %, ein oder mehrere zweite Monomere in einem kombinierten Massenanteil von 70 % oder mehr und ein oder mehrere dritte Monomere in einem kombinierten Massenanteil im Bereich von 5 bis 15 %,
bb) Polymerisieren der Monomerzusammensetzung, bevorzugt mittels radikalischer Polymerisation, insbesondere bevorzugt thermisch initiierter radikalischer Polymerisation,

sowie optional den Verfahrensschritt:
   cc) Vernetzen der in Verfahrensschritt bb) erhaltenen Polymerisate durch einen chemischen Vernetzer, bevorzugt mittels Epoxid-Verbindungen,
sowie zusätzlich optional den Verfahrensschritt:
   dd) Vermischen der in Verfahrensschritt bb) erhaltenen Polymerisate oder der in Verfahrensschritt cc) erhaltenen vernetzten Polymerisate mit weiteren Bestandteilen, insbesondere Klebeharzen und/oder weiteren Additiven.

Nachfolgend werden die Erfindung und bevorzugte Ausführungsformen der Erfindung unter Bezugnahme auf Experimente weiter erläutert und beschrieben.

### A. Herstellung der Co-Polymere:

### Radikalische Lösungsmittelpolymerisation im Batch-Reaktor:

Die radikalische Lösungsmittelpolymerisation im Batch-Reaktor erfolgte in einem 5 L-Glasreaktor, der mit Monomeren und Lösungsmittel gemäß Tabelle 2 befüllt wurde. Es wurde eine Gesamtmasse von 800 g eingesetzt. Das Monomer-Lösemittel-Verhältnis betrug 1:1. Nach 45 Minuten Durchleiten von Stickstoffgas unter Rühren wurde der Reaktor auf 58 °C hochgeheizt und die Reaktion unter Zugabe von 4 g einer 5 wt% 2,2'-Azodi(2-methylbutyronitril)-Lösung (Handelsname Vazo 67, Fa. DuPont) in Aceton gestartet. Anschließend erfolgte für zwei Stunden eine isotherme Prozessführung bei 62 °C. Eine Stunde nach Reaktionsstart wurden erneut 4 g einer 5 wt% 2,2'-Azodi(2-methylbutyronitril)-Lösung zugegeben. Nach Beendigung der isothermen Prozessweise wird auf eine isoperibole bis zum Ende des Prozesses umgestellt. Nach 5 Stunden und 30 Minuten Reaktionszeit und 7 Stunden wurden jeweils 12 g einer 5 wt% Bis-(4-tert-Butylcyclohexanyl)-Peroxydicarbonat-Lösung (Handelsname Paradox 16, Fa Akzo Nobel) in Aceton hinzugegeben. Die Reaktion war nach 24 h Reaktionszeit beendet. Abhängig vom einsetzenden Monomerzusamensetzung wurde basierend auf der Viskositätzunahme bis zu fünf mal verdünnt mit jeweils 80 g des eigesetzten Lösungsmittels. Der k-Wert ist bei den hergestellten Polymeren größer als 45. Zum Polymerisat wird in einem separaten Gefäß Vernetzer (Vernetzermenge und Art gemäß Tabelle 2) und Lösungsmittel zugegeben, um einen Feststoffanteil von 30 wt% zu erzielen.

### Radikalische Lösungsmittelpolymerisation im Semibatch-Reaktor:

Die radikalische Lösungsmittelpolymerisation im Semibatch-Reaktor erfolgte in einem 2 L-Glasreaktor, der mit Monomeren und Lösungsmittel gemäß Tabelle 2 befüllt wurde. Es wurde eine Gesamtmasse (Reaktorvorlage und Feed) von 500 g eingesetzt. Das Monomer-Lösungsmittel-Verhältnis betrug 3:2 sowohl in der Reaktorvorlage als auch im Feed. In die Reaktorvorlage werden 200 g vorgelegt. Nach 45 Minuten Durchleiten von Stickstoffgas unter Rühren wurde der Reaktor auf 58 °C hochgeheizt und die Reaktion unter Zugabe von 5 g einer 5 wt% 2,2'-Azodi(2-methylbutyronitril)-Lösung (Handelsname Vazo 67, Fa. DuPont) in Aceton gestartet. Nach Erreichen des Temperaturmaximums wurden 300 g des Monomer-Lösemittel-Gemisches über 2 h zudosiert und die Reaktorinnentemperatur auf 72 °C gestellt. Darauf folgend wird auf einen isoperibole Fahrweise bei einer Temperatur von 80 °C umgestellt. Nach 0,5 und 1 Stunden Reaktionszeit wurden jeweils 4 g einer 5 wt% 2,2'-Azodi(2-methylbutyronitril)-Lösung (Handelsname Vazo 67, Fa. DuPont) in Aceton hinzugegeben. Anschließend werden nach 6 und 7,5 Stunden nach Reaktionszeit 15 bzw. 10 g einer 5 wt% Bis-(4-tert-Butylcyclohexanyl)-Peroxydicarbonat-Lösung (Handelname Paradox 16, Fa Akzo Nobel) in Aceton hinzugegeben. Die Reaktion war nach 10 h Reaktionszeit beendet. Abhängig vom einsetzenden Monomerzusamensetzung wurde basierend auf der Viskositätzunahme bis zu 5 mal verdünnt mit jeweils 60 g des eigesetzten Lösungsmittels. Der k-Wert war bei den hergestellten Polymeren größer als 45. Zum Polymer wird in einem separaten Gefäß Vernetzer (Vernetzermenge und Art gemäß Tabelle 2) und Lösungsmittel zugegeben, um einen Feststoffanteil von 30 wt% zu erzielen.

### Radikalische Substanzpolymerisation

Die Herstellung der Co-Polymere mittels UV-Polymerisation erfolgt in zwei Schritten. Im ersten wir ein UV-Sirup hergestellt. Dazu werden die Monomere gemäß Tabelle 2 zusammen mit 0,0063 wt% 1,2-Diphenyl-2,2-dimethoxyethanone (Handelsname Irgacure 651) vermischt. Vor Reaktionsstart wird 20 min mit Stickstoffgas unter Rühren durchleiten. Die Gesamtmasse des Reaktionsgemisches betrug 500 g. Mit einer Intensität von 0,5 mW/cm² wird das Reaktionsgemisch bestrahlt bis zu einem Umsatz von 7 %. Im zweiten Schritt wird dieses Reaktionsgemisch mit einem Diacrylat bzw. Vernetzer gemäß Tabelle 2 und 0,12 wt% Irgacure 651 versetzt und homogen verrührt. Dieses UV-Sirup-Gemisch wird zwischen zwei transparenten Linern ausgestrichen und von beiden Seiten mit einem Bestrahlungsprogramm polymerisiert, welches die folgenden Bestrahlungsschritte umfasste, angegeben als Blöcke [l]/[t] wobei l die Intensität in (mW/cm²) und t die Dauer in Sekunden ist: [0,8]/[15]; [12,8]/[150]; [0]/[30]; [8]/[150]; [0]/[30]; [0,8]/[30]; [0]/[30]; [0,8]/[30]; [0]/[30]; [0,8]/[30]; [0]/[30]; [0,8]/[15]; [0]/[30]; [0,8]/[15]; [0]/[30]; [0,8]/[15]; [0]/[30]. Es wurde ein Tape mit einem Massenauftrag von 35 g/cm² hergestellt. Die Gesamtmasse des UV-Sirup-Gemisches betrug 150 g.

**Tabelle 1 - Eingesetzte Monomere und Vernetzer**

| Abk. | Monomer |
|---|---|
| AS | Acrylsäure |
| BA | n-Butylacrylat |
| EHA | 2-Ethylhexylcrylat |
| IBOA | Isobornylacrylat |
| IOA | i-Octylacrylat |
| DMAA | N,N-Dimethylacrylamid |
| ACMO | N-acryloylmorpholine |
| NtBAM | N-t-Butylacrylamid |
| Erisys | N,N,N',N'-Tetrakis(2,3-epoxypropyl)-m-xylen-a,a'-diamin, Handelsname: Erisys GA-240, Fa. Huntsmann |
| Uvacure | 3,4-Epoxycyclohexylmethyl-3',-4'-epoxycyclohexanecarboxylat, Handelsname: Uvacure 1500, Fa. Solvay |
| HDDA | Hexanedioldiacrylat |
| S610 | N,N,N',N'-Tetrakis(2,3-epoxypropyl)cylohexane-1,3-dimethylamine, Handelsname: S610, Fa. Synasia |

**Tabelle 2 - Hergestellte Co-Polymere**

| Nr. | Poly.-Technik | Lösungsm.^{a)} | Monomere^{b)} | Vernetzer^{c)} |
|---|---|---|---|---|
| E1 | Lösungsm. (Batch) | Benzin/Aceton (50:50) | AS 8; DMAA 10; BA 27; EHA 55 | Erisys 0,35 |
| E2 | Lösungsm. (Batch) | Benzin/Aceton (50:50) | AS 8; DMAA 10; BA 27; EHA 55 | Uvacure 1,4 |
| E3 | Lösungsm. (Batch) | Benzin/Aceton (50:50) | AS 10; DMAA 10; BA 27; EHA 53 | Erisys 0,25 |
| E4 | Lösungsm. (Batch) | Benzin/Aceton (50:50) | AS 8; ACMO 8; BA 28; EHA 56 | Erisys 0,3 |
| E5 | Lösungsm. (Batch) | Benzin/Aceton (50:50) | AS 6; NtBAM 8; BA 29; EHA 57 | Erisys 0,3 |
| E6 | Lösungsm. (Semi-Batch) | Ethylacetat/ Isopropanol (97:3) | AS 8; DMAA 10; BA 27; EHA 55 | Uvacure 1,3 |
| E7 | Substanz | - | AS 8; DMAA 10; BA 27; EHA 55 | HDDA 5 |
| E8 | Substanz | - | AS 8; DMAA 10; BA 27; EHA 55 | HDDA 10 |
| V1 | Lösungsm. (Batch) | Benzin/Aceton (50:50) | AS 1; DMAA 11; BA 27; EHA 61 | S610 0,3 |
| V2 | Lösungsm. (Batch) | Benzin/Aceton (50:50) | AS 3; DMAA 9; BA 29; EHA 59 | Erisys 0,3 |
| V3^{d)} | Lösungsm. (Batch) | Benzin/Aceton (50:50) | AS 5,5; IBOA 27; IOA 67,5 | Erisys 0,3 |
| V4^{d)} | Lösungsm. (Batch) | Benzin/Aceton (50:50) | AS 12,5; IBOA 22,5; IOA 65 | Erisys 0,3 |

| | | | | |
|---|---|---|---|---|
| a) Lösungsmittelzusammensetzung als Massenverhältnis; b) Alle Angaben in Massenanteilen bezogen auf die Gesamtmasse der Monomere; c) Alle Angaben in Massenanteilen bezogen auf den Feststoffgehalt des Polymers; d) Polymerzusammensetzung analog US 20150361307A1 (als Beispiel für im Stand der Technik eher untypische Systeme mit hohen Gehalten an AS). | | | | |

### B. Herstellung der Haftklebebänder und Präparation der Druckzylinder:

Die zu untersuchenden Haftklebebänder wurden in Abhängigkeit von der Herstellung der Co-Polymere wie folgt hergestellt.

Die Haftklebemasse aus der Lösemittelpolymerisation wurden jeweils auf einen Liner (SILPROP KA 110 B XRX0384/XRX0415) mittels Rakel ausgestrichen. Nach einer Trocknung von 20 Minuten bei 80 °C betrug das Masseauftragsgewicht 35 g/m².

Bei dem bereits bandförmigen Resultat der Substanzpolymerisation wird der Release-Liner abgelöst und die weitere Verarbeitung erfolgte analog zur Lösemittelpolymerisation.

Masseseitig wurde das beschichtete Abdeckmaterial mit einer mittels Trichloressigsäure beidseitig geätzten 19 mm dicken PET-Folie kaschiert. Anschließend wurde über einen Transferträger eine handelsübliche Acrylatmasse mit einem Masseauftrag von 20 g/m² auf die unbeschichtete Seite der geätzten PET-Folie des Verbundes laminiert und ein PE-EVA-Schaum mit einer Dicke von 500 mm und einem Raumgewicht von 250 kg/m³ hinzu kaschiert, auf dessen Oberseite anschließend wiederum eine handelsübliche Acrylatmasse mit einem Masseauftrag von 20 g/m² aufgebracht wurde. Aus dem so erzeugten doppelseitigen Haftklebeverbund wurde jeweils ein 250 mm x 160 mm großes Muster geschnitten.

Die hergestellten Muster werden jeweils so mit der handelsüblichen, offen liegenden Acrylathaftklebeschicht auf einen Zylinder mit einem Durchmesser von 110 mm geklebt, dass die kürzeren Kanten der Muster in Längsrichtung des Zylinders ausgerichtet sind. Anschließend wird der Liner abgezogen, sodass die Schicht, der erfindungsgemäß zu verwendenden Haftklebemasse offen liegt. Auf die so verklebten Haftklebeverbund-Muster wird eine vollflächig belichtete Druckplatte der Fa. DuPont Cyrel HOS mit der Abmessung Länge 210 mm x Breite 120 mm x Dicke 1,7 mm so auf die erfindungsgemäß zu verwendende Haftklebemasse verklebt, dass an jeder Kante 20 mm des darunter liegenden Haftklebeverbundes überstehen (zentrierte Aufbringung auf dem Haftklebeverbund-Muster). Das Cliche wird parallel zu der oberen Kante des Haftklebstoffverbundes ausgerichtet. Zuvor wurde die PET-Seite des Cliches mit Isopropanol gereinigt und für 5 Minuten an der Luft trocknen gelassen, damit das Lösungsmittel vollständig abdampfen konnte.

Anschließend wurde das Cliche ausgehend von der oberen Clichekante mit einer Gummi-Rolle (Breite 100 mm, Durchmesser 30 mm, Shore-Härte A 45) angerollt. Die Anrollbewegung erfolgte in Längsrichtung des Druckzylinders und wurde kontinuierlich von jeweils einer Längskante des Cliches zur gegenüberliegenden Längskante des Cliches und wieder zurück ausgeführt. Die Anrollgeschwindigkeit betrug dabei in Querrichtung 10 m/min. Der Druckzylinder rotierte gleichzeitig mit einer Oberflächengeschwindigkeit von 0,6 m/min, sodass mit der Gummirolle relativ zum Druckcliche eine Zick-Zack-Bewegung in Richtung auf die zweite Querkante des Cliches beschrieb. Die Montage des Cliches auf den Haftklebeverbund erfolgte mit der entsprechenden Anpresskraft, die erforderlich ist, um das Cliche vollflächig und ohne Kantenabheben zu fixieren.

Als weitere Vergleichsbeispiele V5 und V6 wurden zwei kommerziell erhältliche Haftklebebänder eingesetzt, nämlich das Handelsprodukt "Plus Plate Mounting Tape 1020" der Fa. 3M (V5) und das Handelsprodukt DuploFlex5.2 Plus der Fa. Lohmann (V6). Diese wurden in analoger Weise zu dem vorstehend beschrieben Vorgehen an dem Druckzylinder befestigt.

### C. Testmethoden:

### Testmethode 1 (TM1) - Druckerfarbenbeständigkeiten

Zum Erhalt von mit Druckerfarben verunreinigten Cliches wurden die wie vorstehend beschrieben gereinigte PET-Seite der Cliches zusätzlich mithilfe eines Stück Zellstoffs mit der Abmessung Länge 30 mm x Breite 30 mm x Dicke 4 mm mit 5 mL einer Druckerfarben-Lösung aus einer kommerziell erhältlichen Druckerfarbe (Handelsname: Siegwerk DMO 40, enthaltend Ceelulosenitrat und Titanchelat, wobei die Druckerfarbe in qualitativen Übersichtsversuchen danach ausgewählt wurde, dass sie eine höchstmögliche Reaktivität zu den eingesetzten Klebemassen zeigen sollte) gelöst in 100 mL Ethanol bestrichen, wobei entweder eine Lösung mit einer hohen Konzentration an Druckerfarbe (120 g/100 mL; HK) oder einer geringen Konzentration an Druckerfarbe (60 g/100 mL; GK) eingesetzt wurde. Dies erfolgt in Streifen zunächst horizontal, wobei das Cliche vollflächig mit der Lösung benetzt wurde. Anschließend wurde das Cliche mit demselben Zellstoffstück ein zweites Mal, dies Mal in vertikale Richtung, bestrichen. Anschließend wurde das Cliche für 1 Minute an der Luft gelagert, damit das Lösungsmittel abdampfen konnte. Das verunreinigte Cliche wird analog zum vorstehend beschriebenen Testaufbau verklebt. Der Zylinder wurde mit dem jeweiligen Haftklebeband und dem jeweils verklebten Klischee senkrecht auf einer seiner Stirnseiten stehend für 72 Stunden bei 40 °C gelagert.

Die Bewertung der Interaktion zwischen Druckerfarbe und Haftklebemasse erfolgte qualitativ. Die für die Demontage der jeweiligen Klischees benötigte subjektiv aufzuwendende Kraft wird von einer erfahrenen Arbeitskraft beurteilt. Die Demontage wird im Stehen durchgeführt, die Füße schulterbreit auseinander. Das Klischee wird mit beiden Händen an einer zur Längsrichtung des Stahlzylinders verlaufenden Kante angefasst und mit etwa 300 mm/min in Querrichtung zum Stahlzylinder (radial) abgezogen.

Die Bewertung des Kraftaufwandes und des Ablöseverhaltens erfolgt unter Verwendung einer in der Branche genutzten qualitativen Bewertungsskala von 1 bis 5 (1: Sehr leicht, 2: Leicht, 3: Akzeptabel, 4: Schwer, 5: Sehr schwer). Ein kohäsiver Bruch beim Ablösen ist dabei mit einer 5 zu bewerten.

### Testmethode 2 (TM2) - Kantenabheben der sauberen Cliches

Nach der wie vorstehend erfolgten Präparation der Druckzylinder werden die resultierenden Aufbauten mit dem jeweiligen Haftklebeband und dem jeweils verklebten Klischee senkrecht auf einer seiner Stirnseiten stehend für 72 Stunden bei unterschiedlichen Bedingungen gelagert, nämlich bei i) 23 °C und 50 % rel. Luftfeuchte, ii) 40 °C und 50 % rel. Luftfeuchte oder iii) 35 °C und 85 % rel. Luftfeuchte. Vor der Messung erfolgte für 1 Stunde bei 23 °C und 50 % rel. Luftfeuchte eine Klimatisierung.

Die Bewertung der Verklebungsqualität erfolgte über die Vermessung des Kantenabhebens, d.h. des selbstständigen Ablösens der Cliches vom Klebebande unter verschiedenen Einflussbedingungen, wobei niedrige Werte einer vorteilhaften Verklebungsqualität entsprechen.

### Testmethode 3 (TM3) - Lösemitteltest

Das Cliche wird analog zum vorstehend Beschriebenen Vorgehen verklebt. Es wurden eine Lösung bestehend aus (jeweils in Massenanteilen) 75 % Ethanol, 12,5 % Ethylacetat und 12,5 % n-Propanol auf die Kanten der Cliches nach dem Testaufbau gegeben. Nach einer Minute bzw. einer Stunde wurde das Kantenabheben gemessen. Die Bewertung erfolgte wie vorstehend angegeben.

### Testmethode 4 (TM4) - Tack Bestimmung

Das zu testende Haftklebenband wird auf einen Zylinder mit einem Durchmesser von 110 mm so geklebt, dass die kürzeren Kanten der Muster in Längsrichtung des Zylinders ausgerichtet sind. Auf die so verklebten Haftklebeverbund-Muster wird eine vollflächig belichtete Druckplatte der Fa. DuPont Cyrel HOS mit der Abmessung Länge 210 mm x Breite 120 mm x Dicke 1,7 in einem Winkel von 90° senkrecht zum Haftklebefilm aufgelegt. Die Druckerplatte muss am Haftklebeverbund-Muster haften ohne das zusätzlicher Druck auf die Verklebungsfläche ausgeübt wird. Die entsprechende Eigenschaft wurde von einer erfahrenen Arbeitskraft qualitativ als ausreichend (A) beziehungsweise als nicht-ausreichend (NA) bewertet.

### D. Ergebnisse:

Die Ergebnisse der an den erfindungsgemäßen Haftklebemassen und den Vergleichsbeispielen durchgeführten Tests sind in der nachfolgenden Tabelle 3 zusammengefasst.

**Tabelle 3 - Ergebnisse der durchgeführten Tests (n.b. = nicht bestimmt)**

| Nr. | TM1 | | TM2 | | | TM3 | | TM4 |
|---|---|---|---|---|---|---|---|---|
| | HK | GK | 23 °C; 50 % rf | 40 °C; 50 % rf | 35 °C; 85 % rf | 1 min | 1h | Tack |
| E1 | 2 | 1 | 0 | 0 | 4 | 0 | 7 | A |
| E2 | 1 | 1 | 0 | 1 | 16 | 1 | 4 | A |
| E3 | 1 | 1 | 0 | 0 | 7 | 0 | 2 | A |
| E4 | 3 | 2 | 0 | 7 | 24 | 2 | 15 | A |
| E5 | 1 | 1 | 1 | 7 | 17 | 1 | 30 | A |
| E6 | 2 | 1 | 3 | 6 | 22 | 0 | 14 | A |
| E7 | 3 | 2 | 0 | 0 | 10 | 1 | 13 | A |
| E8 | 1 | 1 | 1 | 1 | 18 | 1 | 17 | A |
| V1 | 5 | 4 | 0 | 0 | 1 | 13 | 90 | A |
| V2 | 3 | 3 | 9 | 23 | 46 | 37 | 86 | A |
| V3 | 5 | 5 | n.b. | n.b. | n.b. | n.b. | n.b. | A |
| V4 | 3 | 3 | n.b. | n.b. | n.b. | n.b. | n.b. | A |
| V5 | 4 | 3 | 3 | 4 | 6 | 2 | 10 | NA |
| V6 | 5 | 4 | 2 | 2 | 10 | 22 | 45 | A |

Die in Tabelle 3 zusammengestellten Ergebnisse bestätigen, dass sämtliche der erfindungsgemäßen Haftklebemassen in vorteilhafter Weise für die Verwendung bei der Verklebung von Druckplatten geeignet sind.

Die erfindungsgemäßen Haftklebemassen zeigen eine zufriedenstellende bis ausgezeichnete Beständigkeit gegen Druckerfarbe, auch bei hohen Konzentrationen. Zudem weisen die erfindungsgemäßen Haftklebemassen trotz unterschiedlichster Belastungen ein vorteilhaftes Kantenabheben und den notwendigen Tack auf.

Insgesamt lösen die erfindungsgemäßen Haftklebemassen den bei der Verklebung von Druckplatten bestehenden Zielkonflikt zwischen den sich gegenüberstehenden Anforderungen aus einer hinreichend festen und durch den Tack leicht herzustellenden Verklebung auf der einen Seite und einer leichten Ablösbarkeit auf der anderen Seite besonders vorteilhaft und sind den Vergleichsbeispielen, die wenn überhaupt nur in einzelnen Teilaspekten günstige Eigenschaften zeigen, damit im Gesamtleistungsprofil überlegen.

Dadurch erlauben es erfindungsgemäße Haftklebemassen die in der Druckindustrie eingesetzten Druckplatten auf typischen Untergründen, insbesondere Stahl und Kunststoffen, während des Einsatzes sicher und mit geringem Kantenabheben zu fixieren, jedoch gleichzeitig eine gute Ablösbarkeit der Druckplatten und entsprechend eine möglichst leichte Auflösbarkeit des Klebeverbundes sicherzustellen, auch nach Einwirkung unterschiedlicher anwendungstypischer Belastungsszenarien.

## Patentansprüche

1. Haftklebemasse für die Verklebung von Druckplatten, umfassend ein oder mehrere Co-Polymere in einem kombinierten Massenanteil von 30 % oder mehr, bezogen auf die Masse der Haftklebemasse,
wobei das eine oder die mehreren Co-Polymere herstellbar sind durch Polymerisation einer Monomerzusammensetzung und optional anschließende Vernetzung der Polymerisate, wobei die Monomerzusammensetzung bezogen auf die Masse der Monomerzusammensetzung umfasst:
i) ein oder mehrere erste Monomere in einem kombinierten Massenanteil im Bereich von 5 bis 15 %, wobei die ersten Monomere ausgewählt sind aus der Gruppe bestehend aus Verbindungen der Formel I)
I) CH₂=CR¹-C(O)NR²R³
,
wobei R¹ Wasserstoff oder eine Methylgruppe ist,
wobei R² ausgewählt ist aus der Gruppe bestehend aus Alkylgruppen, Hydroxyalkylgruppen und Acetonylgruppen und wobei R³ ausgewählt ist aus der Gruppe bestehend aus Wasserstoff, Alkylgruppen, Hydroxyalkylgruppen, Arylgruppen, Aminoalkylgruppe und Acetonylgruppen, oder wobei R² und R³ gemeinsam eine organische Verbindungskette bilden, so dass NR²R³ ein Ring mit n Ringatomen ist, wobei n im Bereich von 5 bis 8 liegt,
ii) ein oder mehrere zweite Monomere in einem kombinierten Massenanteil von 70 % oder mehr, wobei die zweiten Monomere ausgewählt sind aus der Gruppe bestehend aus Verbindungen der Formel II)
II) CH₂=CR⁴-C(O)O-R⁵
,
wobei R⁴ Wasserstoff oder eine Methylgruppe ist,
wobei R⁵ ausgewählt ist aus der Gruppe bestehend aus Alkylgruppen und Arylgruppen, und
iii) ein oder mehrere dritte Monomere in einem kombinierten Massenanteil im Bereich von 5 bis 15 %, wobei die dritten Monomere ausgewählt sind aus der Gruppe bestehend aus Verbindungen der Formel III)
III) CH₂=CR⁶-C(O)O-R⁷
,
wobei R⁶ Wasserstoff oder eine Methylgruppe ist,
wobei R⁷ ausgewählt ist aus der Gruppe bestehend aus Wasserstoff und Hydroxyalkylgruppen mit 2 bis 4 Kohlenstoffatomen.

2. Haftklebemasse nach Anspruch 1, wobei die Haftklebemasse das eine oder die mehreren Co-Polymere in einem kombinierten Massenanteil von 50 % oder mehr umfasst, bezogen auf die Masse der Haftklebemasse.

3. Haftklebemasse nach einem der Ansprüche 1 oder 2, umfassend das eine oder die mehreren Co-Polymere als vernetzte Co-Polymere, wobei die vernetzten Co-Polymere herstellbar sind durch Polymerisation der Monomerzusammensetzung und anschließende Vernetzung der durch Polymerisation erhaltenen Polymerisate, wobei die anschließende Vernetzung mit einem chemischen Vernetzer erfolgt.

4. Haftklebemasse nach Anspruch 3, wobei der chemische Vernetzer ausgewählt ist aus der Gruppe bestehend aus multifunktionellen Epoxiden und multifunktionellen (Meth)acrylaten.

5. Haftklebemasse nach einem der Ansprüche 1 bis 4, wobei der kombinierte Massenanteil der ersten Monomere in der Monomerzusammensetzung im Bereich von 6 bis 13 % liegt.

6. Haftklebemasse nach einem der Ansprüche 1 bis 5, wobei der kombinierte Massenanteil der zweiten Monomere in der Monomerzusammensetzung 75 % oder mehr beträgt.

7. Haftklebemasse nach einem der Ansprüche 1 bis 6, wobei der kombinierte Massenanteil der dritten Monomere in der Monomerzusammensetzung im Bereich von 6 bis 13 % liegt.

8. Haftklebemasse einem der Ansprüche 1 bis 7, wobei in der Monomerzusammensetzung der Quotient aus dem kombinierten Massenanteil der ersten Monomere geteilt durch den kombinierten Massenanteil der dritten Monomere 0,8 oder mehr beträgt, und/oder wobei in der Monomerzusammensetzung der Quotient aus dem kombinierten Massenanteil der ersten Monomere geteilt durch den kombinierten Massenanteil der dritten Monomere 2,5 oder weniger beträgt.

9. Haftklebeband, umfassend eine Trägerschicht und eine auf der Trägerschicht angeordnete Klebeschicht, wobei die Klebeschicht eine Haftklebemasse nach einem der Ansprüche 1 bis 8 umfasst.

10. Verwendung einer Haftklebemasse nach einem der Ansprüche 1 bis 8 oder eines Haftklebebandes nach Anspruch 9 zur Befestigung von Druckplatten, insbesondere flexiblen Druckplatten, auf einem Druckzylinder oder einer Druckhülse, zur Verbesserung der Ablösbarkeit der Druckplatten bei der Verarbeitung von Farbe, insbesondere Cellulosenitrat-haltiger Farbe und/oder Titanchelat-haltiger Farbe.
